# FASCICULE DE BREVET EUROPEEN

(11) **EP 2 076 374 B1**
(45) Date de publication et mention de la délivrance du brevet: **12.05.2010**
(21) Numéro de dépôt: 07821503.5
(22) Date de dépôt: 18.10.2007
(51) Int. Cl.: B29C 53/66, B29C 70/38, F16L 9/16

(54) **DISPOSITIF ET PROCEDE DE BOBINAGE FILAMENTAIRE DE TUBES DE GRANDE LONGUEUR ET TUBES DE GRANDE LONGUEUR REALISES PAR CE PROCEDE**
VORRICHTUNG UND VERFAHREN FÜR DIE FASERUMWICKLUNG VON LANGEN ROHREN UND GEMÄSS DEM VERFAHREN HERGESTELLTE LANGE ROHRE
DEVICE AND METHOD FOR THE FILAMENT WINDING OF LONG TUBES AND LONG TUBES REALISED ACCORDING TO SAID METHOD

(30) Priorité: 20.10.2006 FR 0654423
(43) Date de publication de la demande: 08.07.2009
(73) Titulaire: Astrium SAS, 75016 Paris (FR)
(72) Inventeur: GIRAUD, Gérard, 33138 Lanton (FR); COLIN, Christophe, 33160 St Medard En Jalles (FR)
(74) Mandataire: Schmit, Christian Norbert Marie
(86) Numéro de dépôt international: PCT/EP2007/061138
(87) Numéro de publication internationale: WO 2008/046878

(56) Documents cités:
- EP-A1- 0 626 252
- WO-A-01/31661
- FR-A- 2 882 681

## Description

La présente invention concerne un dispositif et un procédé de bobinage filamentaire adaptés aux procédés de réalisation de tubes de grande longueur par bobinage de filaments de fibres ainsi que les tubes réalisés à partir de ce procédé.

Les procédés de bobinage consistent, de façon générale, à déposer un fil en continu pour réaliser des nappes de fils, imprégnés d'une résine sur un mandrin par bobinage puis à faire polymériser la résine pour réaliser les objets bobinés.

Les fils utilisés sont réalisés en particulier à partir de filaments dont la longueur peut atteindre plusieurs kilomètres et dont le diamètre est de l'ordre de la dizaine de microns.

Ces filaments sont regroupés par paquets de plusieurs milliers qui constituent le produit disponible commercialement en tant que fibre, fil ou mèche.

Lors du bobinage, le mandrin est mis en rotation en sorte de dérouler le fil à partir de bobines où il est préalablement stocké.

Le ou les fils mis en oeuvre constituent la nappe de bobinage par l'opération de bobinage.

Plusieurs fils peuvent être bobinés simultanément, les fils étant mis en oeuvre indépendamment les uns des autres réalisant autant de chemins de fils en parallèle que de fils dans la nappe.

Cette technologie est particulièrement adaptée à la réalisation de corps creux, tubes ou réservoirs et en particulier de réservoirs étanches résistant à de fortes pressions.

Cette technique est en particulier utilisée pour réaliser un grand nombre de structures creuses telles que des réservoirs d'ergols de satellites, des bonbonnes d'air comprimé pour la plongée sous-marine, des réservoirs de traitement des eaux de piscines ou des cuves viticoles ou tout type de récipients légers résistants à la pression.

Un exemple de réservoir réalisé avec un tel procédé de bobinage est par exemple décrit dans le document FR2 824 892 A1 au nom de la demanderesse.

Le document FR2 705 655 A1 toujours au nom de la demanderesse décrit pour sa part une machine pour le bobinage simultané d'une pluralité de fils individuels déposés au contact selon le procédé énoncé ci-dessus.

Les fibres utilisées pour réaliser les fils sont les fibres industrielles usuelles telles que des fibres de verre, de silice, de carbone, de carbure de silicium minéral ou des fibres organiques de type PBO, polyester, propylène ou autres.

Ces fibres sont formées sous forme de filaments de très grande longueur (plusieurs kilomètres) et de très faible diamètre (quelques microns), ces filaments étant regroupés au sein de mèches ou fils comportant plusieurs milliers de filaments.

Les résines utilisées pour solidariser les fils bobinés en nappes sont des résines polymères telles que les résines époxy, polyester, acrylique, polyamide ou autre.

Des résines thermodurcissables, initialement liquides et subissant une opération de polymérisation, ou des résines thermoplastiques, polymérisées avant usage et rendues fluides par chauffage, peuvent être indifféremment utilisées dans les procédés de dépose.

Toutefois, pour les pièces à très hautes performances qui utilisent des matériaux composites sous forme de fils bobinés, avec un rendement de fibre au moins égal à 50%, c'est à dire que la pièce réalisée est susceptible de tenir à une sollicitation de près de 50% ou plus de la charge de rupture cumulée de chacun des fils, charge de rupture théorique idéale pour laquelle la pièce aurait une charge de rupture directement liée à la charge de rupture des fils et du nombre de fils, les résines thermodurcissables sont préférées du fait que les rendements obtenus avec les fibres thermoplastiques sont en général inférieurs à ceux obtenus avec les fibres thermodurcissables et du fait que la mise en oeuvre des fibres thermoplastiques est plus complexe et différent.

En outre, a été constaté que tout manque de linéarité du fil ou torsion induit une chute drastique du rendement du bobinage obtenu. Les procédés de dépose doivent être en conséquence les plus précis possible pour garantir une grande rectitude des fils déposés et garantir un rendement de fibre le plus haut possible.

Deux types de procédés de bobinages coexistent à ce jour, un procédé pour lequel des fibres sèches sont imprégnées de résine au moment de leur bobinage et un procédé pour lequel les fibres sont des fibres préalablement pré-imprégnées et commercialisées ainsi en bobines qui sont utilisées sans imprégnation complémentaire lors de l'opération de bobinage.

Le premier procédé, à base de fibres sèches imprégnées au moment de leur bobinage, procédé humide, est un procédé économique et ne nécessitant pas de précautions particulières pour le stockage des filaments de fibre.

Par contre, ce procédé est un procédé sale et un procédé pour lequel les filaments glissants sont difficiles à maîtriser lors de leur dépose et difficiles à positionner précisément pour réaliser un récipient homogène, la résine ayant en plus tendance à couler sur le mandrin de dépose et dans les locaux.

Ceci est du au fait que l'imprégnation doit, selon l'art antérieur être faite avec une résine fluide qui joue le rôle de lubrifiant pour les filaments et les fils constitués avec ces filaments, les fils ayant ainsi tendance à glisser soit sur leur support soit les uns par rapport aux autres ce qui limite la précision de la dépose.

Un exemple d'un tel procédé, procédé humide, (procédé "wet" selon la terminologie anglo-saxonne) est illustré par le document US 5 585 414.

Un autre exemple de ce premier procédé est donné par le document EP 0 642 416 A1 qui traite d'un double moyen de polymérisation actinique et thermique.

Ce document illustre le problème de la saleté du procédé wet du fait de la fluidité de la résine lors de l'imprégnation et propose des solutions qui consistent à jouer sur la polymérisation de cette résine par des moyens tels qu'une double polymérisation ou par des moyens d'activation de la polymérisation tels que des moyens thermiques ou lumineux.

Le second procédé est le procédé à base de fibres pré-imprégnées.

Ce procédé qui utilise une résine à fort pouvoir collant est plus propre et plus précis mais plus coûteux du fait que les filaments sont achetés pré-imprégnés et doivent être stockés dans des conditions maîtrisées particulières nécessitant en un contrôle de la température et de l'humidité du lieu de stockage et notamment un maintien des bobines en chambre froide à -18°C pour garantir une durée de vie de la résine de quelques mois.

Dans ce cadre, le document US 5 011 721 concerne un système à double polymérisation, afin de piloter au mieux la polymérisation lors de la dépose et de limiter les risques de polymérisation en stockage.

Ce document illustre la complexité de la fabrication des pré-imprégnés et donc leur coût et montre que la situation nécessite d'être améliorée.

Le document FR 2 862 655 A1 illustre pour sa part une formulation de résine d'imprégnation.

L'ensemble de ces documents montre que les améliorations apportées à ce jour sont complexes et ne sont donc pas totalement satisfaisante.

En ce qui concerne les applications des procédés de bobinage, il y a lieu de noter que le bobinage se fait sur un mandrin pris entre pointes sur une machine du type d'un tour.

Le contrôle de la dépose des fils est en rapport avec une telle précision et on conçoit aisément que le contrôle de la fluidité de la résine et de sa polymérisation soient critiques pour la dépose, qu'il s'agisse de la platitude des fils déposés, de leur rectitude et de l'absence de glissement des fils lors du dépôt.

La présente invention à pour premier objectif de combiner les avantages des technologies procédé humide et procédé à fibres pré-imprégnées à savoir:
- avoir un coût de bobinage similaire au procédé humide;
- bobiner avec une fibre ayant un fort pouvoir collant, comme pour le procédé à fibres pré-imprégnées, mais sans problème de péremption lors du stockage des fibres;
- imprégner juste avant le bobinage des fibres stockées sèches mais sans risquer de coulures de résine telles que dans le procédé humide;
- éviter la gestion d'une cinétique de polymérisation comme dans le procédé à base de fibres pré-imprégnées,
- garantir une dépose précise des fils sans risque de glissement, de défauts de rectitude et de positionnement des fils.

Le document EP 0 626 252 A1 de l'art antérieur concerne le bobinage de tubes entre deux poupées d'un banc de tournage multi-poste.

Ce document décrit une table mobile pourvue de rouleaux fous d'une longueur proche de celle des mandrins pour présenter et enlever les mandrins.

Lorsque le bobinage est réalisé, la table mobile est abaissée pour éviter tout contact entre les rouleaux et les mandrins.

Ce dispositif n'est pas utilisable au long du bobinage du fait que la table ne comporte pas de moyens permettant d'appliquer une pression contrôlée sur la pièce en cours de bobinage.

Dans ce but et dans le cadre de la réalisation de tubes de grande longueur, l'invention propose un dispositif de bobinage filamentaire de tubes de grande longueur **caractérisé en ce qu**'il comporte un mandrin disposé entre pointes d'un tour, un système support du mandrin à rouleaux, un dispositif de déroulement de fils formés à partir de filaments de fibres, un dispositif d'imprégnation des fils par de la résine et un dispositif de bobinage, et des moyens d'augmentation de viscosité de la résine déposée sur les fils entre le dispositif d'imprégnation et le dispositif de bobinage.

L'invention s'applique en particulier à la réalisation de tubes de grande longueur qui ne sont pas compatibles avec le procédé wet du fait que la résine dans ce procédé est fluide et que les tubes de grande longueur devant reposer sur des moyens support limitant la flèche d'un mandrin sur lequel le ou les fils sont bobinés, un essorage de la résine au niveau du contact du mandrin avec les moyens support est alors inévitable.

L'invention propose en outre un procédé de bobinage filamentaire de tubes de grande longueur comportant une étape de déroulement de fils, une étape d'imprégnation des filaments par de la résine, **caractérisé en ce qu**'il comporte une étape de positionnement d'un mandrin entre pointes d'un tour, une étape de mise en appui du mandrin sur un système support rotatif, une étape de mise en rotation du tour et une étape de bobinage de fils imprégnés sur le mandrin.

Le procédé selon l'invention s'applique en particulier à un tube de grande longueur **caractérisé en ce qu**'il est réalisé à partir d'un composite bobiné comportant des fils imprégnés avec un taux de résine de 30 à 35%.

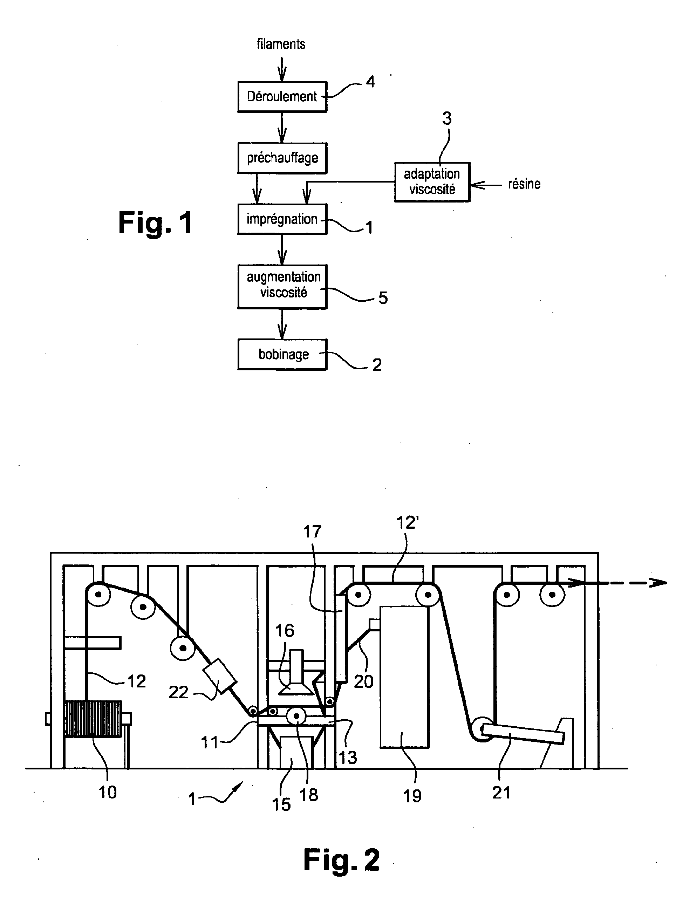

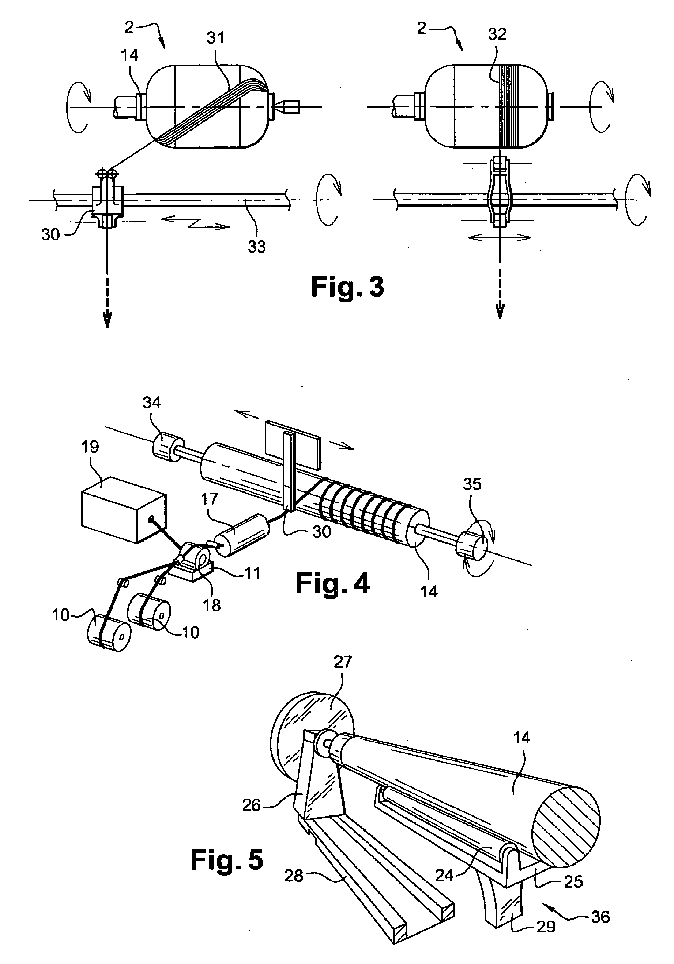

D'autres caractéristiques et avantages de l'invention seront apparents à la lecture de la description qui va suivre d'un exemple non limitatif de réalisation de l'invention en référence aux dessins annexés qui représentent:
en figure 1 : un synoptique des étapes d'un procédé selon l'invention;
en figure 2: une vue schématique d'une première partie d'un exemple de réalisation d'un dispositif selon l'invention;
en figure 3: une vue de dessus d'un dispositif de bobinage, seconde partie du dispositif de la figure 2;
en figure 4: une vue en perspective schématique d'un dispositif selon l'invention;
en figure 5: une vue en perspective coupe du dispositif de bobinage de la figure 4.

L'invention concerne un dispositif de bobinage de tubes de grande longueur et les tubes résultants.

L'enchaînement des étapes d'un procédé de bobinage filamentaire selon l'invention est schématisé à la figure 1.

Le procédé schématisé en figure 1 comporte pour commencer une étape 4 de déroulement de fils 12 réalisés à partir de filaments de fibres enroulés sur une bobine distributrice 10 représentée à la figure 2.

Le procédé détaillé à la figure 1 comporte ensuite une étape 1 d'imprégnation des fils par de la résine 13 de type résine thermodurcissable et une étape 2 de bobinage et comporte, selon l'invention, une étape 3 d'adaptation de viscosité de la résine en vue de l'étape d'imprégnation 1.

L'étape d'imprégnation est réalisée avec une résine non polymérisée sur les fils après leur déroulement.

La résine est fluidifiée par l'étape 3 d'adaptation de la viscosité qui comporte un chauffage de la résine.

Après l'étape d'imprégnation, et avant l'étape de bobinage 2, le procédé de l'invention comporte une étape 5 d'augmentation de viscosité de la résine.

Ainsi le procédé, qui comporte une fluidification de la résine pour l'imprégnation des fils et une augmentation de la viscosité de la résine pour le bobinage en sorte d'éviter les glissements des fils sur le mandrin, de conserver un positionnement précis de ces fils sur le mandrin, d'éviter l'essorage des filaments de fibres et en sorte de conserver l'espace de bobinage propre et exempt de coulures de résine, cumule les avantages des procédés antérieurs puisqu'il utilise des fibres sèches pour les fils comme dans le procédé wet et une résine visqueuse à température ambiante comme dans le procédé pré-imprégné.

Pour conserver les caractéristiques de la résine au long du procédé, l'étape d'adaptation de viscosité 3 est préférablement réalisée sans provoquer d'avancement de la polymérisation de la résine 13.

Pour cette étape, on part d'une résine de forte viscosité que l'on chauffe, à partir de la température ambiante, à une température au-dessous de la température de début de polymérisation.

Cette étape d'adaptation de viscosité de la résine a pour but de la fluidifier et la rendre compatible avec l'imprégnation de filaments de fils selon un taux de résine adapté de l'ordre de 30 à 35%. Elle comporte avantageusement une étape de refroidissement rapide des fils imprégnés 12' qui augmente la viscosité de la résine à une valeur adaptée au dépôt des fils imprégnés, notamment une valeur de viscosité de l'ordre de 500 000 mPa.s à 1 000 000 mPa.s.

Le refroidissement est notamment adapté à stopper tout début de polymérisation de la résine dans le cas où l'étape d'adaptation de viscosité aurait tendance à initier un début de polymérisation de la résine. Pour ce faire, pour l'étape de refroidissement rapide, le dispositif de l'invention prévoit des moyens de refroidissement 17 constitués par un tunnel de refroidissement faisant passer rapidement la résine d'une température de l'ordre de 70 à 75°C à la température ambiante.

Selon un mode de réalisation particulier du procédé, la résine utilisée est une résine d'une viscosité de l'ordre de 500 000 mPa.s à 1 000 000 mPa.s à température ambiante.

Pour permettre une bonne imprégnation des fibres, la résine est une résine d'une viscosité inférieure ou égale à 2000 mPa.s à une température supérieure ou égale à 30°C et préférablement une résine d'une viscosité inférieure ou égale à 2000 mPa.s à une température supérieure ou égale à 70°C

Ces différences de viscosité en fonction de la température permettent une bonne différentiation des conditions des étapes d'imprégnation, avec bonne fluidité de la résine et haute température, et de bobinage après refroidissement, avec une résine faiblement fluide.

Les résines utilisables sont en particulier des résines époxy, polyester ou vinylester respectant les critères de viscosité décrits précédemment

L'étape d'adaptation de la viscosité de la résine du procédé selon l'invention consiste à porter la résine à une température de l'ordre de 30 à 80°C et préférablement à porter la résine à une température de l'ordre de 70°C à 75°C pour la fluidifier.

Le dispositif de bobinage filamentaire à partir de fils secs réalisés à partir de filaments de fibres sèches selon l'invention est schématisé à la figure 2 pour la partie du dispositif permettant de réaliser les étapes du procédé comprenant le déroulement du fil, l'adaptation de viscosité de la résine, l'imprégnation et l'étape d'augmentation de la viscosité alors que la partie du dispositif permettant de réaliser l'étape de bobinage est décrite en figure 3.

Le dispositif représenté à la figure 2 comporte une bobine 10 d'alimentation en fils secs constitués de filaments de fibres sèches, un bac 11, d'imprégnation des fils par de la résine 13, disposé en sortie de la bobine d'alimentation, un module 22 de préchauffage des fils secs 12 avant imprégnation, de façon à ce que le fil ne refroidisse pas localement la résine lors de son imprégnation, et, de façon à ce que l'imprégnation soit la plus homogène et la plus rapide possible.

Le bac d'imprégnation est chauffé, selon l'exemple, par un dispositif de bain thermostaté 17 à eau ou à huile qui permet de réguler en température le bac d'imprégnation, le chauffage étant complété, au niveau d'un rouleau encreur 18 plongeant dans le bac d'imprégnation et en contact avec les fils pour réaliser l'imprégnation 1 des filaments des fils, par un dispositif de chauffage à air chaud 16.

En aval du bac d'imprégnation, le dispositif comporte des moyens 17, de refroidissement des fils imprégnés, qui sont disposés entre le bac d'imprégnation 11 et le mandrin de bobinage 12.

Ces moyens de refroidissement 17 sont, comme il a été vu plus haut, constitués par un tunnel de refroidissement assurant un refroidissement rapide du fil en cours de bobinage.

Le tunnel est préférablement dimensionné pour que, à la vitesse maximale de bobinage, la température du fil en sortie du tunnel de refroidissement soit la température ambiante.

Pour délivrer la résine, le dispositif comporte une unité d'injection/dosage 19 pourvue d'un doseur multi-composants et d'un canal 20 d'injection de la résine dans le bac d'imprégnation 11.

L'utilisation d'une unité d'injection pourvue d'un doseur multi-composants permet de mélanger les divers composants de la résine en fonction de la consommation de résine dans le bac.

Ce dernier est avantageusement pourvu d'un contrôleur de niveau permettant de réguler le débit de résine injectée en fonction de la consommation du dispositif.

De cette façon, la résine n'a pas le temps d'évoluer pendant l'imprégnation ce qui permet de travailler sur de longues périodes en continu.

La résine peut éventuellement être préchauffée dans l'unité d'injection/dosage en vue de son injection dans le bac.

Le dispositif de la figure 2 comporte en outre un système 21 de rattrapage de boucles et plusieurs poulies disposées pour assurer le cheminement du fil et une tension constante du fil déposé malgré les variations de vitesse de dépose liées à la forme à réaliser.

Le procédé de bobinage filamentaire est en particulier réalisé en continu et la figure 3 représente la fin du dispositif, à savoir les moyens de bobinage qui comportent un dispositif mécanique 30, 33 de déplacement du point de dépose du fil et le mandrin 14.

La partie gauche de la figure 3 représente un bobinage de type enroulement hélicoïdal 31, permettant d'obtenir une tenue longitudinale du réservoir, et la partie droite un enroulement de type circonférentiel 32, très favorable à la tenue en pression interne d'un réservoir.

Le fil est préférablement déposé sous forme de mèche plate sans torsion.

Une fibre utilisée dans le cadre de l'invention est une fibre dénommée T700 24K de la société Toray et la résine une résine époxy de classe 180°C de référence de base LMB 6458 de la société Huntsman, comprenant des composants référencés LMB 6459 (100pp) et LY 556 (50pp).

Cette base est catalysée avec un catalyseur XB 3515 à raison de 22pp de catalyseur pour 100pp de base.

L'imprégnation a été faite à 75°C dans le bac d'imprégnation.

Un exemple de dispositif de bobinage de tubes de grande longueur est donné en figure 5.

Le mandrin doit être suffisamment résistant pour ne pas se déformer et, pour que le bobinage soit de bonne qualité, la flèche du mandrin ne doit pas dépasser environ 5mm pour une portée de mandrin de 10m.

Le mandrin 14 sur lequel sera bobiné le tube est fixé entre pointes 34, 35 d'un tour, une pointe étant solidaire d'une poupée de tour 26 et entraîné en rotation par un moteur dont le volant 27 est visible sur la figure.

Le mandrin repose sur un système support rotatif 36 réalisé selon l'exemple par un support à rouleaux à rouleaux dont un rouleau 24 au moins est monté sur ressorts et qui comporte un bâti 25 et un pied 29 comme représenté en figure 5.

Le système à rouleaux est pourvu d'un degré de liberté pour permettre aux rouleaux de rester parallèles au tube lors du bobinage.

Pour un tube de grande longueur, c'est à dire un tube du type précité, autrement dit un tube un tube tel que la flèche du tube sur son mandrin entre pointes et en l'absence de support dépasse 0,05%, ce qui correspond à une flèche de 5mm pour un tube de 10m, les rouleaux du dispositif support seront disposés à l'endroit où la flèche est maximale et le tube est en appui tout au long du bobinage sur le dispositif support.

De même, les rouleaux sont agencés pour assurer une pression contrôlée sur la pièce en cours de bobinage alors même que le diamètre de la pièce augmente au fur et à mesure du dépôt des couches de fils de fibres.

Il est nécessaire que les rouleaux puissent être appliqués sur les fils en cours de bobinage.

Le cas des tubes de grandes longueurs est donc un cas typique pour lequel l'utilisation d'un procédé humide n'est pas appropriée, du fait que la fabrication de tels tubes nécessite la présence de supports ou de rouleaux pour soutenir le mandrin et le tube en cours de réalisation, et, du fait que le procédé humide d'une part conduirait à un essorage des fibres au contact des rouleaux et, d'autre part, conduirait à un positionnement incontrôlé des fibres déplacées par ces rouleaux.

En outre, tenter de réduire le taux de résine du procédé humide n'est pas une solution envisageable car, si le taux de résine est diminué au-dessous de 25%, les propriétés mécaniques du matériau se dégradent du fait que les filaments de fibres des fils ne sont plus assez liés entre eux.

Il est donc traditionnellement établi dans le métier du bobinage que seul le procédé utilisant des fibres pré-imprégnées est adapté à réaliser de tels tubes.

Contrairement à cette idée traditionnelle, avec le procédé selon la présente invention, le bobinage de fils circonférentiels et longitudinaux à partir de fils réalisés à partir de filaments de fibres sèches peut être employé sans problème sur des tubes de grande longueur reposant sur des rouleaux et avec un taux de résine inférieur à 35%.

Dans ce cadre, de préférence, les étapes de d'adaptation de viscosité et d'augmentation de viscosité sont réglées pour obtenir une imprégnation avec un taux de résine de 30 à 35%, adapté à la réalisation de tubes de grande longueur de hautes performances à partir d'un composite bobiné imprégné d'une résine thermodurcissable.

La qualité de dépose obtenue est semblable à celle obtenue avec un pré-imprégné, en particulier la dépose se fait sans effilochage des fibres qui traduirait une détérioration de ces fibres.

Le procédé de l'invention permet donc d'éviter l'emploi de fibres pré-imprégnées onéreuses pour bobiner des réservoirs ou des tubes de grande longueur tout en conservant une qualité de bobinage de grande précision qui ne peut être obtenue avec le procédé humide de base.

L'invention ne se limite pas aux exemples représentés et notamment, une installation de bobinage selon l'invention peut comprendre le traitement de plusieurs fils en parallèle pour constituer une nappe de bobinage contenant jusqu'à plusieurs dizaines de fils.

## Revendications

1. Dispositif de bobinage filamentaire de tubes de grande longueur **caractérisé en ce qu'**il comporte un mandrin (14) disposé entre pointes (34, 35) d'un tour (26), un système support du mandrin (14) à rouleaux (36), un dispositif de déroulement de fils (12) formés à partir de filaments de fibres, un dispositif d'imprégnation des fils par de la résine et un dispositif de bobinage, et des moyens d'augmentation de viscosité de la résine déposée sur les fils entre le dispositif d'imprégnation et le dispositif de bobinage (2) et pour lequel les rouleaux sont agencés pour assurer une pression contrôlée sur la pièce en cours de bobinage alors même que le diamètre de la pièce augmente au fur et à mesure du dépôt des couches de fils de fibres.

2. dispositif selon la revendication 1 pour lequel au moins un rouleau (24) est monté sur ressorts.

3. dispositif selon la revendication 1 ou 2 pour lequel les moyens d'augmentation de la viscosité sont des moyens de refroidissement (17) constitués par un tunnel de refroidissement assurant un refroidissement rapide du fil en cours de bobinage.

4. dispositif selon l'une des revendications précédentes pour lequel le système à rouleaux est pourvu d'un degré de liberté pour permettre aux rouleaux de rester parallèles au tube lors du bobinage.

5. Procédé de bobinage filamentaire de tubes de grande longueur comportant une étape (4) de déroulement de fils (12), une étape (1) d'imprégnation des filaments par de la résine (13), **caractérisé en ce qu'**il comporte une étape de positionnement d'un mandrin (14) entre pointes (34, 35) d'un tour (26), une étape de mise en appui du mandrin sur un système support rotatif (36) à rouleaux (36) pour lequel les rouleaux sont agencés pour assurer une pression contrôlée sur la pièce en cours de bobinage alors même que le diamètre de la pièce augmente au fur et à mesure du dépôt des couches de fils de fibres, une étape de mise en rotation du tour et une étape (2) de bobinage de fils imprégnés sur le mandrin et **en ce qu'**il comporte une étape (3) d'adaptation de viscosité de la résine en vue de l'étape d'imprégnation (1), **en ce que** l'étape d'imprégnation est réalisée sur les fils après déroulement avec une résine non polymérisée, fluidifiée par ladite étape (3) d'adaptation de la viscosité, et **en ce qu'**il comporte une étape (5) d'augmentation de viscosité de la résine entre l'étape d'imprégnation (1) et l'étape de bobinage (2).

6. procédé de bobinage filamentaire de tubes de grande longueur selon la revendication 5 **caractérisé en ce que** l'étape d'augmentation de viscosité est adaptée à rendre la résine collante et visqueuse.

7. procédé de bobinage filamentaire de tubes de grande longueur selon la revendication 5 **caractérisé en ce que** l'étape d'adaptation de viscosité et l'étape d'augmentation de viscosité sont réglées pour obtenir une imprégnation des fils avec un taux de résine de 30 à 35%.

8. tube de grande longueur réalisé à partir d'un procédé de bobinage filamentaire selon l'une des revendications 5 à 7 **caractérisé en ce qu'**il est réalisé à partir d'un composite bobiné comportant des fils imprégnés avec un taux de résine de 30 à 35%.

9. tube de grande longueur selon la revendication 8 **caractérisé en ce qu'**il est réalisé à partir d'un composite bobiné imprégné d'une résine thermodurcissable.

## Claims

1. A device for the filamentary winding of long tubes, **characterised in that** it includes a winding tube (14) disposed between two centres (34, 35) of a lathe (26), a system for supporting the winding tube (14) with rollers (36), a device for paying out threads (12) formed from filaments of fibres, a device for impregnating threads with resin and a winding device, and means for increasing the viscosity of the resin deposited on the threads between the impregnation device and the winding device (2) and for which the rollers are arranged to provide a controlled pressure on the piece during winding while the diameter of the piece increases as the layers of fibre threads are deposited.

2. A device according to claim 1, for which at least one roller (24) is mounted on springs.

3. A device according to claim 1 or 2, for which the means for increasing the viscosity are cooling means (17) formed by a cooling tunnel providing rapid cooling of the thread during winding.

4. A device according to one of the preceding claims, for which the roller system is provided with a degree of freedom to enable the rollers to remain parallel to the tube during winding.

5. A method for the filamentary winding of long tubes, comprising a step (4) of paying out threads (12) and a step (1) of impregnating the filaments with resin (13), **characterised in that** it includes a step of positioning a winding tube (14) between centres (34, 35) of a lathe (26), a step of bringing the winding tube to bear on a rotary support system (36) with rollers (36), for which the rollers are arranged so as to provide a controlled pressure on the piece during winding while the diameter of the piece increases as the layers of threads of fibres are deposited, a step of setting the lathe in rotation and a step (2) of winding impregnated threads on the winding tube, and **in that** it comprises a step (3) of adapting the viscosity of the resin with a view to the impregnation step (1), **in that** the impregnation step is performed on the threads after paying out with a non-polymerised resin, fluidised by said viscosity adaptation step (3), and **in that** it comprises a step (5) of increasing the viscosity of the resin between the impregnation step (1) and the winding step (2).

6. A method for the filamentary winding of long tubes according to claim 5, **characterised in that** the viscosity increase step is adapted to make the resin sticky and viscous.

7. A method for the filamentary winding of long tubes according to claim 5, **characterised in that** the viscosity adaptation step and the viscosity increase step are adjusted so as to obtain an impregnation of the threads with a resin level of 30% to 35%.

8. A long tube produced using a filamentary winding method according to one of claims 5 to 7, **characterised in that** it is produced from a wound composite comprising threads impregnated with a resin level of 30% to 35%.

9. A long tube according to claim 8, **characterised in that** it is produced using a wound composite impregnated with a thermosetting resin.

## Patentansprüche

1. Vorrichtung zum Wickeln von Rohren mit großer Länge aus Filamenten, **dadurch gekennzeichnet, dass** sie einen Dorn (14), der zwischen Spitzen (34, 35) einer Haspelmaschine (26) angeordnet ist, ein Rollen-Unterstützungssystem (36) für den Dorn (14), eine Vorrichtung (12) zum Abwickeln von Fäden, die aus Faserfilamenten gebildet sind, eine Vorrichtung zum Imprägnieren der Fäden mit Harz und eine Wicklungsvorrichtung sowie Mittel zum Erhöhen der Viskosität des auf die Fäden aufgebrachten Harzes zwischen der Imprägnierungsvorrichtung und der Wicklungsvorrichtung (2) umfasst, wobei die Rollen dazu ausgelegt sind, einen kontrollierten Druck auf das Teil während des Wickelns selbst dann zu gewährleisten, wenn der Durchmesser des Teils in dem Maß, in dem Schichten aus Faserfäden abgelagert werden, zunimmt.

2. Vorrichtung nach Anspruch 1, bei der wenigstens eine Rolle (24) auf Federn montiert ist.

3. Vorrichtung nach Anspruch 1 oder 2, bei der die Mittel zum Erhöhen der Viskosität Kühlungsmittel (17) sind, die durch einen Kühlungstunnel gebildet sind, der eine schnelle Kühlung des Fadens während des Wickelns gewährleistet.

4. Vorrichtung nach einem der vorhergehenden Ansprüche, bei der das Rollensystem mit einem Freiheitsgrad versehen ist, um den Rollen zu ermöglichen, während des Wickelns parallel zu dem Rohr zu bleiben.

5. Verfahren zum Wickeln von Rohren mit großer Länge aus Filamenten, das einen Schritt (4) des Abwickelns von Fäden (12) und einen Schritt (1) des Imprägnierens von Fäden mit Harz (13) umfasst, **dadurch gekennzeichnet, dass** es einen Schritt des Positionierens eines Dorns (14) zwischen Spitzen (34, 35) einer Haspelmaschine (26), einen Schritt des Abstützens des Dorns auf einem drehbaren Rollen-Unterstützungssystem (36), wobei die Rollen so beschaffen sind, dass sie einen kontrollierten Druck auf das Teil während des Wickelns selbst dann gewährleisten, wenn der Durchmesser des Teils in dem Maß, in dem Schichten aus Faserfäden aufgebracht werden, zunimmt, einen Schritt des Drehens der Haspelmaschine und einen Schritt (2) des Wickelns imprägnierter Fäden auf den Dorn umfasst und dass es einen Schritt (3) des Anpassens der Viskosität des Harzes für den Imprägnierungsschritt (1) umfasst, dass der Schritt des Imprägnierens an den Fäden nach dem Abwickeln mit einem nicht polymerisierten Harz erfolgt, das durch den Schritt (3) des Anpassens der Viskosität fluidisiert worden ist, und dass es einen Schritt (5) des Erhöhens der Viskosität des Harzes zwischen dem Imprägnierungsschritt (1) und dem Wicklungsschritt (2) umfasst.

6. Verfahren zum Wickeln von Rohren großer Länge nach Anspruch 5, **dadurch gekennzeichnet, dass** der Schritt des Erhöhens der Viskosität dazu ausgelegt ist, das Harz klebend und viskos zu machen.

7. Verfahren zum Wickeln aus Fasern von Rohren mit großer Länge aus Filamenten nach Anspruch 5, **dadurch gekennzeichnet, dass** der Schritt des Anpassens der Viskosität und der Schritt des Erhöhens der Viskosität gesteuert werden, um eine Imprägnierung der Fäden mit einem Harzanteil von 30 bis 35 % zu erhalten.

8. Rohr mit großer Länge, das mit einem Verfahren zum Wickeln aus Filamenten nach einem der Ansprüche 5 bis 7 hergestellt ist, **dadurch gekennzeichnet, dass** es aus einer Verbundstoffwicklung verwirklicht ist, die imprägnierte Fäden mit einem Harzanteil von 30 bis 35 % enthält.

9. Rohr mit großer Länge nach Anspruch 8, **dadurch gekennzeichnet, dass** es aus einem gewickelten Verbundstoff verwirklicht ist, der mit einem wärmeaushärtbaren Harz imprägniert ist.
